# EUROPEAN PATENT APPLICATION

(11) **EP 4 442 892 A1**
(43) Date of publication of application: **09.10.2024**
(21) Application number: 22904571.1
(22) Date of filing: 02.12.2022
(51) Int. Cl.: D06F 34/18, D06F 58/12, G01G 9/00, G01G 17/00, G01S 7/03, D06F 33/46, D06F 33/72

(54) **CLOTHING TREATMENT APPARATUS**

(30) Priority: 07.12.2021 KR 20210173846
(71) Applicant: LG Electronics Inc., Yeongdeungpo-gu Seoul 07336 (KR)
(72) Inventor: LEE, Jaehoon, Seoul 08592 (KR); CHOI, Kyuchun, Seoul 08592 (KR); KIM, Dongseong, Seoul 08592 (KR); JOO, Hyungkook, Seoul 08592 (KR); KIM, Daewoo, Seoul 08592 (KR)
(74) Representative: Schott, Jakob Valentin
(86) International application number: PCT/KR2022/019453
(87) International publication number: WO 2023/106741

(57) **Abstract**

A laundry treatment apparatus includes a cabinet, an inner case disposed in the cabinet and provided with walls defining an accommodation space in which clothes are accommodated, a supply unit configured to supply at least one of air or moisture to the accommodation space, a clothes hanger disposed in the accommodation space so as to support the accommodated clothes, and a sensor assembly installed between the cabinet and the inner case, and configured to sense at least one of a quantity of clothes accommodated in the accommodation space and a position of the accommodated clothes by emitting electromagnetic waves as a signal and receiving a reflected signal.

## Description

### [Technical Field]

The present disclosure relates to an apparatus for treating laundry.

### [Background Art]

Generally, a laundry treatment apparatus may refer to an apparatus for performing various tasks (e.g., washing, drying, deodorization, wrinkle removal, etc.) related to laundry, and may conceptually include a washing machine for washing laundry, a drying machine for drying wet or washed laundry, a refresher for deodorizing laundry or removing wrinkles from laundry, and the like.

Recently, a laundry treatment apparatus for hanging laundry inside a cabinet thereof and treating hung laundry has been developed and rapidly come into widespread use. Such a laundry treatment apparatus is a home appliance for refreshing or sterilizing laundry by supplying hot air, cold air, or steam to the laundry. The laundry treatment apparatus can also be used to remove fine dust or to dry wet laundry. For this reason, such a laundry treatment apparatus may also be referred to by various terms such as a refresher, a styler, a laundry purifier, AirDresser, and the like.

Such a laundry treatment apparatus may be provided to treat a small amount of laundry. For example, the laundry treatment apparatus may be provided to treat 1 to 5 articles of clothing, and the clothes are arranged in an accommodation space of the laundry treatment apparatus while being hung on hangers. Since a conventional laundry treatment apparatus cannot recognize the type and number of clothes arranged in an accommodation space thereof, a user must manually set and input a desired course (e.g., a standard course, courses for functional clothes, etc.) to the laundry treatment apparatus. In addition, since the conventional laundry treatment apparatus is unable to recognize how many clothes are hung on hangers in the accommodation space, stages (or courses) to be performed by the laundry treatment apparatus are preset to operate on the assumption that the total number of hung clothes arranged in the accommodation space is always set to maximum capacity.

In order to recommend an optimal course according to the amount of clothes and the type of clothes, there has been proposed a new method for installing a vision sensor into the laundry treatment apparatus. However, when the vision sensor is installed in the laundry treatment apparatus, the following problems i), ii), and iii) may occur. In problem i), when the accommodation space of the laundry treatment apparatus is filled with steam and the like, a field of view (FOV) in the accommodation space is blurred by the steam, which may cause a problem that the vision sensor has difficulty in technically recognizing what objects are present in the accommodation space. In problem ii), the vision sensor should be exposed to a product surface without being hidden in the laundry treatment apparatus, so that the exposed vision sensor is disadvantageous to the appearance design of the laundry treatment apparatus. In problem iii), in a situation where several pieces of clothes are hung on the hanger in an overlapping manner, when a near object present within a reference near field from the vision sensor is first recognized by the vision sensor, the vision sensor has difficulty in recognizing other clothes present behind the recognized object.

In addition, as related prior art, Korean Patent Publication No. KR10-2019131B1 has been proposed, which discloses an artificial intelligence (AI) laundry treating machine that can more specifically recognize states of each article of clothing using a weight sensor embedded therein, can determine the strength, intensity, or time for optimal laundry treatment based on the recognized states or conditions, and can thus automatically provide optimal laundry treatment information.

### [Disclosure]

### [Technical Problem]

An object of the present disclosure is to provide a laundry treatment apparatus capable of measuring the amount of clothes disposed therein.

Another object of the present disclosure is to provide a laundry treatment apparatus capable of detecting the number (amount) of clothes disposed therein.

Another object of the present disclosure is to provide a laundry treatment apparatus capable of detecting a location where the clothes are hung.

Another object of the present disclosure is to provide a laundry treatment apparatus including a sensor that is capable of measuring the number (amount) of clothes and/or the location where the clothes are hung without being exposed to a product surface.

Another object of the present disclosure is to provide a laundry treatment apparatus capable of suggesting an optimal laundry treatment course to a user based on the measured number (amount) of clothes hung therein.

Another object of the present disclosure is to provide a laundry treatment apparatus capable of sensing falling of laundry during a laundry treatment stage and providing an inform(for example, an alarm) to a user.

Another object of the present disclosure is to provide a laundry treatment apparatus including a radar sensor assembly capable of sensing what objects have been accommodated in a closed space.

The technical problems to be solved by the present disclosure are not limited to the above technical problems and those skilled in the art may understand other technical problems from the following description.

### [Technical Solutions]

In accordance with one aspect of the present disclosure, a laundry treatment apparatus may include a cabinet, an inner case disposed in the cabinet and provided with walls defining an accommodation space in which clothes are accommodated, a supply unit configured to supply at least one of air or moisture to the accommodation space, a clothes hanger disposed in the accommodation space so as to support the accommodated clothes, and a sensor assembly installed between the cabinet and the inner case, and configured to sense at least one of a quantity of clothes accommodated in the accommodation space and a position of the accommodated clothes by emitting electromagnetic waves as a signal and receiving a reflected signal.

The clothes hanger may be provided to allow a plurality of clothes to be hung in a first direction, and the sensor assembly may be installed in a direction in which the plurality of clothes appears to overlap each other.

The clothes hanger may be provided to allow a plurality of clothes to be hung in a first direction, and the sensor assembly may be installed in a direction in which the first direction extends.

The sensor assembly may be installed at a position lower than a height of the lowermost end of the clothes hanger

The sensor assembly may be installed at a position lower than an average height of lower ends of hangers supported by the clothes hanger.

The sensor assembly is installed at a position lower than an average height of lower ends of hangers supported by the clothes hanger by a first height or more, wherein the first height may be defined differently according to an electromagnetic-wave radiation angle of the sensor assembly.

The electromagnetic-wave radiation angle may be set in a manner that all of top garments and bottom garments supported by the clothes hanger are within a range of the radiated electromagnetic waves, wherein the radiation angle is set to a range in which several hangers supported by the clothes hanger are not included in the range of the radiated electromagnetic waves.

The electromagnetic-wave radiation angle may be set in a manner that all of tops and bottoms caught on the clothes hanger are included in a range of the radiated electromagnetic waves, wherein the radiation angle is set to a range in which the radiated electromagnetic waves do not reach the walls defining the accommodation space.

The sensor assembly may be mounted at an installation angle between a first angle and a second angle. The first angle is an angle at which the radiated electromagnetic waves do not reach the clothes hanger, and the second angle is an angle at which the radiated electromagnetic waves do not reach a bottom surface of the inner case.

The sensor assembly may include: a sensor board configured to transmit the electromagnetic waves and receive reflected electromagnetic waves; and a lens located at a front side of the sensor board to switch a propagation direction of the electromagnetic waves in a manner that a radiation angle of the electromagnetic waves transmitted from the sensor board is narrowed.

The sensor assembly may include: a sensor board configured to transmit and receive an electromagnetic wave signal; and a shielding member located at a rear side of the sensor board, and configured to shield transmission of electromagnetic waves.

The shielding member may be configured to have a larger area than the sensor board in a manner that the entire area of the sensor board overlaps the shielding member.

The shielding member may be configured to have a ' [ '-shaped cross-section formed to surround a side surface of the sensor board.

The sensor assembly further may include an insulating member disposed between the sensor board and the shielding member.

The laundry treatment apparatus may further include a controller. If the quantity of clothes sensed by the sensor assembly is changed in a treating cycle of the laundry treatment apparatus, the controller determines occurrence of fallen clothes.

When occurrence of the fallen clothes is determined, the laundry treatment apparatus may provide an inform to a user.

In accordance with another aspect of the present disclosure, a laundry treatment apparatus may include a cabinet configured to include walls defining an accommodation space in which clothes are accommodated; and a sensor installed in a space separated from the accommodation space by the walls, and configured to sense at least one of a quantity of clothes accommodated in the accommodation space and a position of the accommodated clothes by emitting electromagnetic waves as a signal and receiving a reflected signal.

In accordance with another aspect of the present disclosure, a home appliance defining a limited space therein may include a sensor assembly, wherein the sensor assembly may include: a sensor board configured to transmit electromagnetic waves and receive reflected electromagnetic waves; and a lens located at a front side of the sensor board to switch a propagation direction of the electromagnetic waves in a manner that a radiation angle of the electromagnetic waves transmitted from the sensor board is narrowed; and a shielding member located at a rear side of the sensor board and configured to shield transmission of electromagnetic waves, whereby the sensor assembly senses an object accommodated in a limited space.

The shielding member may be configured to have a larger area than the sensor board in a manner that the entire area of the sensor board overlaps the shielding member.

The sensor assembly may further include an insulating member disposed between the sensor board and the shielding member.

### [Advantageous Effects]

As is apparent from the above description, the laundry treatment apparatus according to the embodiments of the present disclosure can measure the amount of laundry (i.e., the number of clothes) disposed therein.

The laundry treatment apparatus according to various embodiments of the present disclosure may include a sensor capable of measuring the amount of laundry without being exposed to the surface of a product.

The laundry treatment apparatus according to various embodiments of the present disclosure may suggest an optimal course for laundry treatment to a user based on the measured number of clothes and/or the location where the clothes are hung. As effects of this, the amount of power used by the laundry treatment apparatus can be reduced. Or a damage to clothes to be treated by a laundry treatment stage can be reduced.

The laundry treatment apparatus according to various embodiments of the present disclosure can detect falling of clothes in a laundry treatment stage. When falling of clothes is detected, the laundry treatment apparatus can provide an inform(for example, alarm) to the user.

The laundry treatment apparatus according to various embodiments of the present disclosure may include a radar sensor capable of detecting the presence or absence of objects disposed in a closed space.

The laundry treatment apparatus according to various embodiments of the present disclosure can reduce the number of misrecognitions caused by irregular or diffuse reflection that may occur when a radar sensor designed to use electromagnetic waves is used in a closed space.

Effects of the present disclosure are not limited to the above-described effects and other effects which are not described herein will become apparent to those skilled in the art from the following description.

### [Description of Drawings]

FIG. 1 is a perspective view illustrating a laundry treatment apparatus according to an embodiment of the present disclosure.
FIGS. 2 and 3 are enlarged cross-sectional views of a machine room 700 to explain various kinds of hardware provided in the machine room 700 according to an embodiment of the present disclosure.
FIG. 4 is a cross-sectional view illustrating a laundry treatment apparatus viewed from a Y-axis direction, and is an enlarged view illustrating a position where a sensor assembly 800 is provided according to an embodiment of the present disclosure.
FIG. 5 is a cross-sectional view illustrating a laundry treatment apparatus viewed from a Y-axis direction, and shows a radiation angle of the sensor assembly 800 according to an embodiment of the present disclosure.
FIGS. 6A to 6E are views illustrating recognition rates for each angle with which the sensor assembly 800 is mounted in the laundry treatment apparatus.
FIG. 7 is a cross-sectional view illustrating a sensor assembly 1800 according to a first embodiment of the present disclosure.
FIG. 8 is a diagram illustrating a state in which a propagation direction of electromagnetic waves is switched through a lens 1820.
FIG. 9 is a diagram illustrating a misrecognition example in which an electromagnetic wave signal emitted from a sensor board 1810 is reflected from an outer wall of an inner case 15 and returns to the rear of the sensor assembly 800 to cause misrecognition of an object to be sensed.
FIG. 10 is a cross-sectional view illustrating a sensor assembly 2800 according to a second embodiment of the present disclosure.
FIG. 11 is a diagram illustrating a state in which a propagation direction of electromagnetic waves is switched through a lens 2820.
FIG. 12 is a cross-sectional view illustrating a sensor assembly 3800 according to a third embodiment of the present disclosure.
FIG. 13 is a cross-sectional view illustrating a sensor assembly 4800 according to a fourth embodiment of the present disclosure.
FIG. 14 is a cross-sectional view illustrating a sensor assembly 5800 according to a fifth embodiment of the present disclosure.
FIG. 15 is a flowchart illustrating a method for controlling the laundry treatment apparatus 1 according to an embodiment of the present disclosure.

### [Best Mode]

Reference will now be made in detail to the embodiments of the present disclosure, examples of which are illustrated in the accompanying drawings. The configuration or control method of the apparatus to be described below is only for explaining the embodiments of the present disclosure and not for limiting the scope of the present disclosure. Throughout the disclosure, like reference numerals refer to like parts throughout the various figures and embodiments of the present disclosure.

Specific terminology used in this specification is only for convenience of description and is not intended to be limiting of the illustrative embodiments.

For example, expressions such as "same" and "identical" not only indicate the strictly identical state, but also indicate a state in which a tolerance or a difference in the degree of obtaining the same function exists.

It will be understood that, when an element is referred to as being "connected to" another element, the element can be connected to the other element or intervening elements may also be present. In contrast, when an element is referred to as being "directly connected to" another element, there are no intervening elements present.

In description of the present disclosure, the terms "comprising," "including," and "having" shall be understood to designate the presence of particular features, numbers, steps, operations, elements, parts, or combinations thereof, but not to preclude the presence or addition of one or more other features, numbers, steps, operations, elements, parts, or combinations thereof.

For instance, an expression indicating a relative or absolute arrangement such as "in a certain direction", "along a certain direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

In order to explain the present disclosure, the following description will be given based on a spatial orthogonal coordinate system by an X-axis, a Y-axis and a Z-axis orthogonal to each other. Each axial direction (X-axis direction, Y-axis direction, Z-axis direction) means both directions in which each axis extends. A "+" sign (+X-axis direction, +Y-axis direction, +Z-axis direction) in front of each axial direction means a positive direction, which is one of both directions in which each axis extends. A "-" sign (-X-axis direction, -Y-axis direction, -Z-axis direction) in front of each axial direction means a negative direction, which is the other of both directions in which each axis extends.

The expressions referring to directions such as "before (+Y)/after (-Y)/left (+X) /right (-X)/up (+Z)/down (-Z)" mentioned below are defined according to an XYZ coordinate axis. However, the expressions are only to explain the present disclosure to be clearly understood, and it is needless to say that each direction may be defined differently depending on where a reference is placed.

The use of terms such as "first, second, and third" in front of the components mentioned below is only to avoid confusion of referred components, and is irrelevant to an order, an importance, or a master/slave relationship between the components. For example, an embodiment including only a second component without a first component can be implemented.

A singular representation may include a plural representation unless it represents a definitely different meaning from the context.

In description of the present disclosure, the term "and/or" may include a combination of a plurality of items or any one of a plurality of listed items. For example, "A or B" may include "only A", "only B", and/or "both A and B".

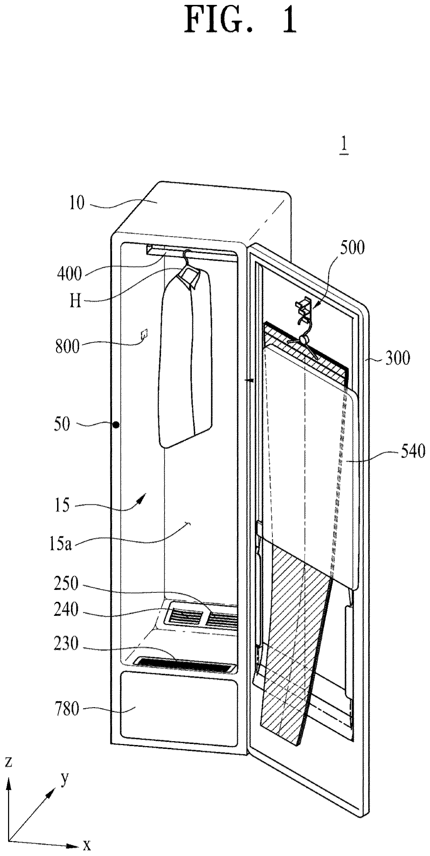

FIG. 1 is a perspective view illustrating a laundry treatment apparatus 1 according to an embodiment of the present disclosure.

Referring to FIG. 1, the laundry treatment apparatus 1 may include a cabinet 10, an inner case 15, a door 300, a first clothes hanger 400, and a second clothes hanger 500.

The cabinet 10 may form an exterior appearance of the laundry treatment apparatus 1.

The inner case 15 may provide an accommodation space 15a for accommodating clothes therein. Here, the inner case 15 may also be referred to as a laundry accommodation unit in which clothes to be treated are disposed. The accommodation space 15a may be defined by wall surfaces forming the inner case 15. In general, the accommodation space 15a may have a substantially hexahedral shape, and one surface corresponding to a front surface of the hexahedral shape may be open. The door 300 may be provided at the open surface of the accommodation space 15a.

The door 300 may be coupled to the cabinet 10. The accommodation space 15a may be open or closed by the door 300. According to the opening or closing of the door 300, a user may access the accommodation space 15a. A control panel (not shown) may be provided at a front surface of the door 300 as a user interface for inputting an operation of the laundry treatment apparatus 1 or displaying an operation state of the laundry treatment apparatus 1. The user may input one or more commands to the laundry treatment apparatus 1 through a control panel (not shown). The user may recognize treatment information of laundry that is currently treated by referring to the control panel. The control panel may be referred to as an input means for inputting information, and may also be referred to as an output means for outputting information. That is, the control panel may serve as an information input/output (I/O) unit.

The first clothes hanger 400 may support the clothes accommodated in the laundry treatment apparatus. The first clothes hanger 400 may be provided in the accommodation space 15a. The first clothes hanger 400 may be located inside the accommodation space 15a. The first clothes hanger 400 may be implemented in various shapes. According to this embodiment, the first clothes hanger 400 may be disposed in a width direction (e.g., the width direction of the door, the X-axis direction) of the accommodation space 15a. In another embodiment not shown, a plurality of hangers may be provided to extend from the ceiling of the inner case 15. The plurality of hangers may be arranged in the X-axis direction.

The clothes may be supported by the first clothes hanger 400 through a hook of each clothes hanger H. However, the clothes may be supported by the first clothes hanger 400 without using the clothes hanger H. In any case, the clothes will remain unfolded in the accommodation space 15a.

The second clothes hanger 500 may be provided on the door 300. The clothes hung on the second clothes hanger 500 may be fixed by a presser 540. The presser 540 may refer to a means for removing wrinkles from clothes by using steam and hot air supplied to the accommodation space 15a or for fixing preset wrinkles on clothes.

The presser 540 may refer to a means for removing wrinkles from clothes by using steam and hot air supplied to the accommodating space 15a or for fixing preset wrinkles on clothes. The clothes supported by the second clothes hanger 500 may be pressed by the presser 540 while maintaining the unfolded and preset-wrinkled state, and the preset wrinkles can be maintained by steam and hot air. As long as at least one of steam and hot air supplied to the accommodation space 15a can be supplied to the clothes, the presser 9 may be provided at any position in the accommodation space 15a. FIG. 1 illustrates an example in which the presser 9 is provided on the inner circumferential surface of the door 30 (i.e., the surface of the door forming one surface of the accommodation space 15a).

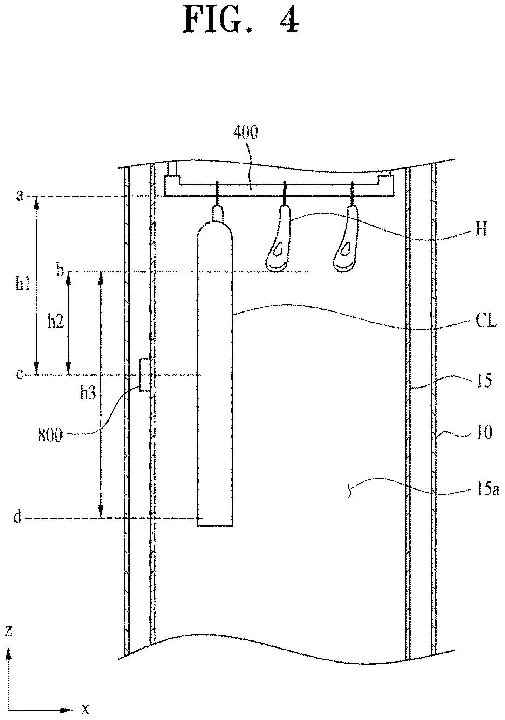

The sensor assembly 800 may detect the amount of clothes caught on the first clothes hanger 400. The sensor assembly 800 will be described later with reference to the drawings from FIG. 4. Specifically, the sensor assembly 800 may detect the amount (number) of clothes caught on the first clothes hanger 400.

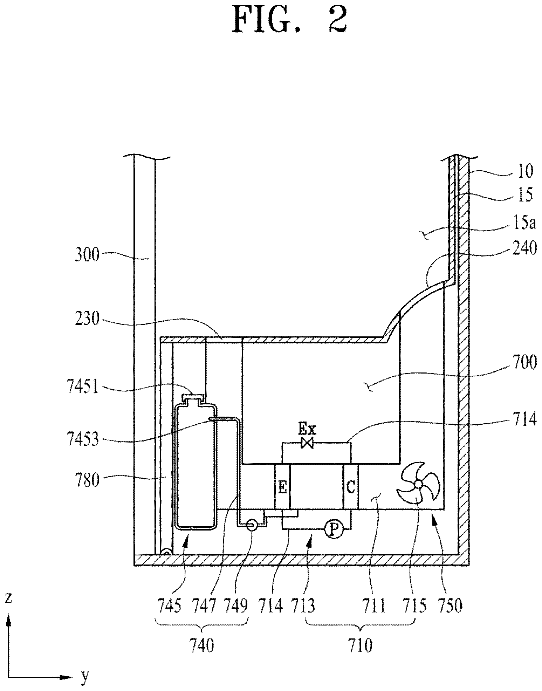

A machine room 700 (see FIG. 2) may be provided under the inner case 15. The machine room 700 may be separated from the accommodation space 15a. The machine room 700 may be opened and/or closed by the machine room door 780. Various kinds of hardware may be provided in the machine room 700.

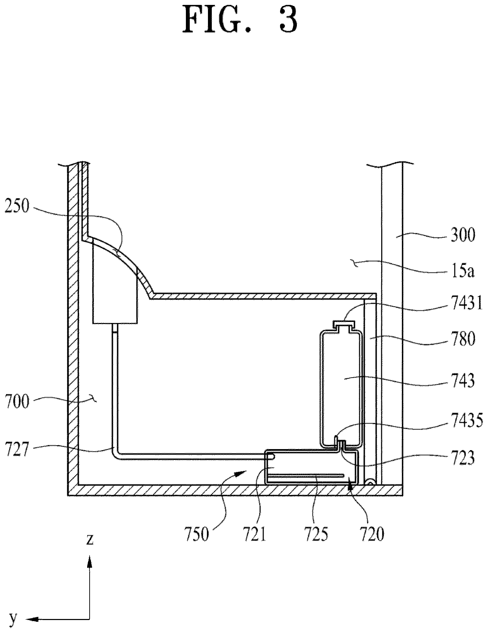

FIGS. 2 and 3 are enlarged cross-sectional views of a machine room 700 to explain various kinds of hardware provided in the machine room 700 according to an embodiment of the present disclosure. Various kinds of hardware provided in the machine room 700 will be described with reference to FIGS. 2 and 3.

According to the embodiment, the machine room 700 may be located below the accommodation space 15a. A supply unit 750 may be located in the machine room 700. In a situation where the air supplied to the accommodation space 15a by the supply unit 750 is heated air (hot air) and the moisture supplied to the accommodation space by the supply unit 750 is steam, as long as the machine room 7 is located below the accommodation space 15a, hot air or steam can be uniformly supplied into the accommodation space 15a without using a separate blower. In a situation where clothes are disposed in the accommodation space 15a of the laundry treatment apparatus 1, the laundry treatment apparatus 1 can provide the supply unit 750 with hot air or cold air to the supply unit 750 located below the cabinet, or can press the clothes, so that the clothes can be deodorized and wrinkles in the clothes can be removed through such pressing.

The supply unit 750 may include at least one of an air supply unit 710 (see FIG. 2) for supplying air (heated air or unheated air) to the accommodation space 15a, and a moisture supply unit 720 (see FIG. 3) for supplying air (steam or mist) to the accommodation space 15a.

For convenience of description, an example case in which the supply unit 750 includes both the air supply unit 710 and the moisture supply unit 720 will hereinafter be described. In addition, the following example case will describe a situation in which the air supply unit 710 supplies hot air to the accommodation space 15a and the water supply unit 720 supplies steam to the accommodation space 15a.

The air supply unit 710 may include a circulation duct 711, a heat exchange unit 713, and a blower 715.

The circulation duct 711 may be configured to circulate the air inside the accommodation space 15a. The circulation duct 711 may be located inside the machine room 700. The circulation duct 711 may communicate with the inside of the accommodation space 15a through an air inlet 230 and an air outlet 240 that are formed to communicate with the accommodation space 15a. The air inlet 230 and the air outlet 240 may pass through the bottom surface of the accommodation space 15a. The air inlet 230 and the air outlet 240 may be provided to allow the accommodation space 15a and the machine room 700 to communicate with each other. One end of the circulation duct 711 may be connected to the air inlet 230 and the other end may be connected to the air outlet 240, so that the circulation duct 711 can communicate with the inside of the accommodation space 15a. A filter (not shown) may be provided near the air inlet 230. The filter may be provided to filter dust or fine dust, and may be detachably installed in the machine room. If necessary, a plurality of filters may also be provided according to filter performance.

The heat exchange unit 713 may be configured to exchange heat with air flowing along the circulation duct 711. The heat exchange unit 713 may refer to a means for dehumidifying and heating the air introduced into the circulation duct 711. In FIG. 2, a heat pump is shown as an example of the heat exchange unit. When the heat exchange unit 713 is provided as a heat pump, the heat exchange unit 713 may include a compressor (P) and an expander (Ex) located outside the circulation duct, an evaporator (E) provided in the circulation duct 711, and a condenser (C) located in the circulation duct 711. The evaporator (E), the compressor (P), the condenser (C), and the expander (Ex) are connected to each other through a refrigerant pipe 714.

The compressor (P) may refer to a means for compressing a refrigerant to a high pressure so that the refrigerant can be circulated along the refrigerant pipe 714. The evaporator (E) may refer to a means for evaporating the refrigerant by absorbing heat from the air inside the circulation duct 711. The condenser (C) may refer to a means for condensing the refrigerant by discharging heat to the air inside the circulation duct 711.

The blower 715 may be configured to apply a pressure difference so that the air inside the accommodation space 15a flows along the circulation duct 711. The blower 715 may be located inside the circulation duct 711 so that the air inside the accommodation space 15a can be circulated through the circulation duct 711. The blower 715 may be disposed between the condenser (C) and the air outlet 240. When the blower 715 is operated, the air inside the circulation duct 711 may move to the accommodation space 15a through the air outlet 240, and the air inside the accommodation space 15a may move to the circulation duct 711 through the air inlet 230.

The air flowing into the circulation duct 711 through the air inlet 230 may be cooled while passing through the evaporator (E), and the air passing through the evaporator (E) may be heated while passing through the condenser (C). When the air is cooled while passing through the evaporator (E), moisture contained in the air is removed (dehumidification), and the moisture (condensed water) removed from the air remains on the surface of the evaporator or remains in the circulation duct. If the condensed water remains inside the circulation duct 711, the heat exchange efficiency of the heat exchange unit 713 is lowered, and therefore the laundry treatment apparatus according to the present disclosure may further include a drain unit 740 for removing the condensed water generated by the evaporator (E).

The drain unit 740 may include a drain tank 745, a drain pipe 747, and a drain pump 749.

The drain tank 745 may be detachably provided to the door 780 of the machine room. The drain tank 745 may be provided in any shape capable of providing a space in which liquid can be stored. Preferably, the drain tank 745 may include a drain tank lid 7451 for discharging the liquid stored inside the drain tank 745 and an inlet port 7453 to which the drain pipe 747 is detachably connected. A check value (not shown) may be further provided in the inlet port 7453. The check valve (not shown) may also prevent water in the drain tank 745 from leaking out of the drain tank 745 when the drain tank 745 is separated from the machine room door 780. On the other hand, when the machine room door 780 opens the machine room 700, the drain pipe 747 is separated from the inlet port 7453. When the machine room door 780 closes the machine room 700, the drain pipe 747 may be inserted into the inlet port 7453.

The drain pipe 747 is a connection pipe for supplying the condensed water inside the circulation duct 711 to the drain tank 745.

The drain pump 749 may be installed in the drain pipe 747, and may provide a pressure with which the condensed water in the circulation duct 711 is supplied to the drain tank 745.

The moisture supply unit 720 may include a storage unit 721, a heater 725, and a moisture supply pipe 727.

The storage unit 721 may be configured to store water therein. The storage unit 721 may be located inside the machine room 700.

The heater 725 may be provided inside the storage unit 721. The heater 725 may refer to a means for converting water into steam by heating the water stored in the storage unit 721. Preferably, the heater 725 may be provided adjacent to the bottom surface of the storage unit 721.

The moisture supply pipe 727 may refer to a means for guiding steam inside the storage 721 to the accommodation space 15a. The water supply pipe 727 may connect the storage unit 721 to a moisture outlet 250. Preferably, the moisture supply pipe 727 may be located at a top surface (or uppermost end) of the storage unit 721.

The storage unit 721 may receive water through the water supply unit. For example, the water supply unit is a water supply tank 743. The water supply tank 743 may be detachably provided on the machine room door 780. In this case, when the machine room door 780 closes the machine room 700, the storage unit 721 and the water supply tank 743 may be connected to each other, and when the machine room door 780 opens the machine room 700, a connection pipe 723 may enable the storage unit 721 and the water supply tank 743 to be separated from each other.

The water supply tank 743 may be provided in any shape as long as a liquid can be stored therein. For example, the water supply tank 743 may include a water supply tank lid 7431 for supplying liquid to the inside of the water supply tank, an outlet (not shown) into which the connection pipe 723 is inserted, and a check valve 7435 provided in the outlet.

Meanwhile, the reason why the water supply tank 743 is detachably provided in the machine room door 780 is to consider an example case in which the laundry treatment apparatus 100 is installed at a position far from a water supply source (not shown). If the laundry treatment apparatus 1 is provided at a position adjacent to the water supply source, the storage unit 721 may be controlled to receive water from the water supply source when necessary. However, when the position where the laundry treatment apparatus 1 is installed is far away from the water supply source, there is a problem that the above-described control method is impossible, so that the water supply tank 743 may serve as a means for solving this problem.

FIG. 4 is a cross-sectional view illustrating the laundry treatment apparatus viewed from a Y-axis direction, and is an enlarged view illustrating a position where a sensor assembly 800 is provided.

The sensor assembly 800 is a radar (RAdio Detection And Ranging) sensor that transmits electromagnetic waves and receives reflected electromagnetic waves to identify objects. The sensor assembly 800 emits electromagnetic waves as a signal and detects a reflected signal(electromagnetic waves reflected back) from a target. The sensor assembly 800 may detect the amount of clothes caught on the first clothes hanger 400. The sensor assembly 800 may detect the position of clothes caught on the first clothes hanger 400.

The clothes may be hung on the first clothes hanger 400 indirectly or directly. For example, clothes hung on the clothes hanger (H) may be caught on the first clothes hanger 400.

The sensor assembly 800 may be installed between the cabinet 10 and the inner case 15. The space in which the sensor assembly 800 is installed is a space separated from the accommodation space 15a. In an embodiment, the sensor assembly 800 may be installed in a space separated from the accommodation space 15a by the inner case 15. The sensor assembly 800 is not exposed to the accommodation space 15a. In the embodiment, the sensor assembly 800 is installed between the inner case 15 and the cabinet 10. In an embodiment, the sensor assembly 800 is installed in the inner case 15. In more detail, the sensor assembly 800 may be installed on the wall surface of the inner case 15. The sensor assembly 800 is blocked from being exposed to the accommodation space 15a by the inner case 15.

According to a conventional vision sensor used to detect clothes, since a camera embedded in the vision sensor is arranged to be inevitably exposed to the accommodation space 15a, the camera is also exposed to steam generated in the treating process of the laundry treatment apparatus 1, such that there are disadvantages in that performance of the vision sensor is deteriorated and an installation position of the vision sensor mounted to the laundry treatment apparatus 1 is unavoidably exposed to a field of view (FOV) of the user. According to an embodiment of the present disclosure, since the sensor assembly 800 is installed in the inner case 15 without being exposed to the outside, an excellent design can be obtained. In addition, since the sensor assembly 800 is not exposed to steam, performance deterioration of the sensor can be prevented. For example, the sensor assembly 800 does not require system maintenance in which the user has to manually wipe the sensor part.

The sensor assembly 800 is installed in the direction in which a sidewall constituting the inner case 15 is located. The inner case 15 may be installed on a wall located in the X-axis direction in which the first clothes hanger 400 extends. One sensor assembly 800 may be provided, or a plurality of sensor assemblies may be provided. When a plurality of clothes is hung on the first clothes hanger 400, the sensor assembly 800 is installed in a direction in which the plurality of clothes appears to overlap each other when viewed from the user.

### [Upper limit height at which the sensor assembly 800 is installed]

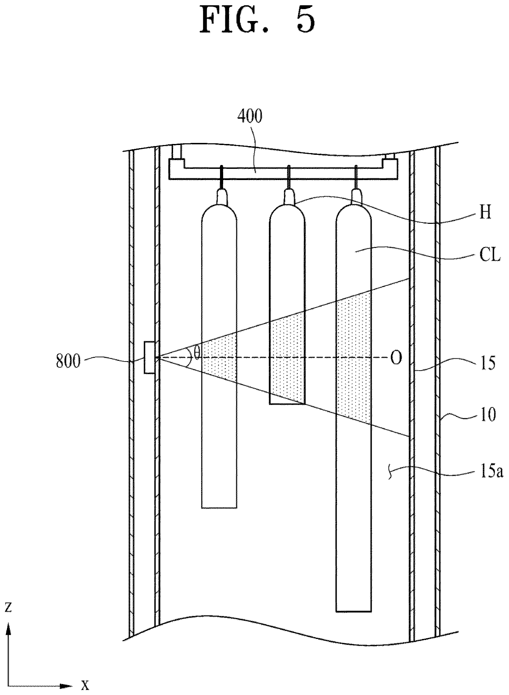

The sensor assembly 800 may be installed at a position lower than the height (a) of the lowermost end of the first clothes hanger 400 by a first height (h1) or more. The first height (h1) may be set to 30 cm. The sensor assembly 800 may be installed at a position lower than the average height (b) of the lower end of the clothes hanger (H) supported by the first clothes hanger 400 by a second height (h2) or more. The second height h2 may be set to 10 cm. After the clothes hanger (H) is mounted on the first clothes hanger 400, the sensor assembly 800 is preferably installed at a position where the sensor assembly 800 does not detect the presence of the clothes hanger (H). Although the first height (h1) and the second height (h2) can be defined differently depending on the radiation angle θ (see FIG. 5) of the sensor assembly 800, the first height (h1) may be set to 30 cm based on the appropriately established radiation angle (Θ) or the second height (h2) may be set to 10 cm based on the appropriately established radiation angle (θ).

### [Lower height at which the sensor is installed]

The sensor assembly 800 is installed at a specific position higher than a position (d) that is lower than the average height of the lower end of the clothes hanger (H) (supported by the first clothes hanger 400) by a third height (h3). The third height (h3) may be set to 50 cm. The lower limit height may be determined based on a relatively short and small garment such as a top or jacket. Although it is difficult to specify the standard clothes to be used as a reference value, the embodiment of the present disclosure may assume that the appropriate height of the reference garment to be used as a reference is 50 cm or less for convenience of description.

FIG. 5 is a cross-sectional view illustrating the laundry treatment apparatus viewed from the Y-axis direction, and shows a radiation angle of the sensor assembly 800 according to an embodiment of the present disclosure.

The sensor assembly 800 is a radar sensor that transmits electromagnetic waves and receives reflected electromagnetic waves to identify objects. The sensor assembly 800 emits electromagnetic waves and detects electromagnetic waves reflected back from the target. The sensor assembly 800 detects the quantity of clothes (i.e., the number of clothes) hung on the first clothes hanger 400.

The electromagnetic waves emitted from the sensor assembly 800 may have a radiation angle. The radiation angle (Θ) of the electromagnetic waves may include first to second angles. The first angle may be smaller than the second angle. The radiation angle (Θ) of the electromagnetic waves may be determined in a manner that all of tops and bottoms caught on the first clothes hanger 400 can be included in the range of the radiated electromagnetic waves. In addition, the radiation angle (Θ) of the electromagnetic waves may be set to a range in which the first clothes hanger 400 is not included in the radiated electromagnetic wave range. More preferably, the radiation angle (Θ) of the electromagnetic waves may be set to a range in which the clothes hanger (H) supported by the first laundry hanger 400 is not included in the radiated electromagnetic wave range.

The first angle may be 10 degrees (10°). If the radiation angle is set to be smaller than the first angle, the measurement range may be reduced so that the entire clothing may not be covered. The second angle may be 20 degrees (20°). If the radiation angle is set to be greater than the second angle, noise caused by a signal reflected from the wall defining the accommodation space (due to diffuse reflection) may occur.

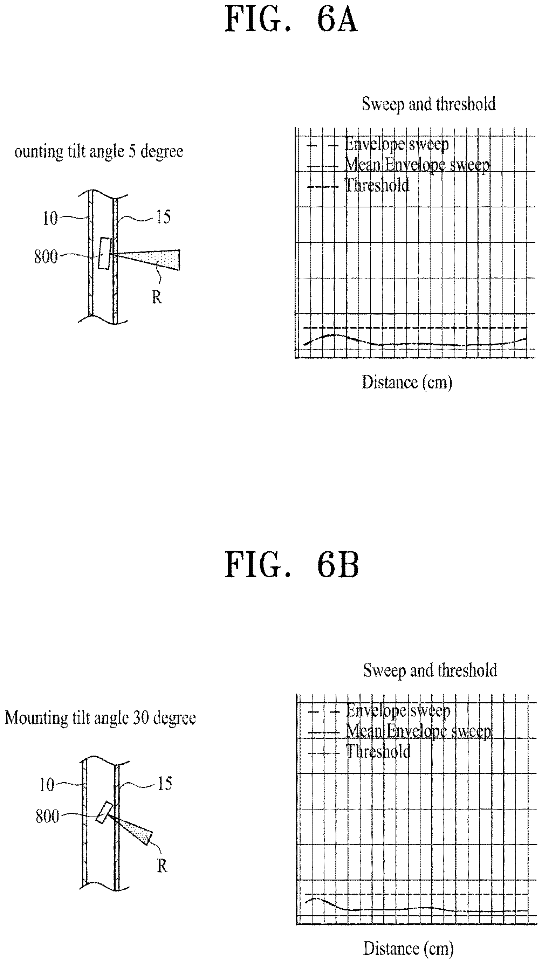

FIGS. 6A to 6E are views illustrating recognition rates for each angle with which the sensor assembly 800 is mounted in the laundry treatment apparatus. The mounting angle of the sensor assembly 800 as defined herein may refer to an installation angle of the sensor assembly 800 configured to set the center of the radiated electromagnetic waves. For example, if the mounting angle is 0 degrees (0 ° ), this means that the center of the radiated electromagnetic waves is parallel to the ground. As can be seen from the drawings, the direction in which the radiated electromagnetic waves are inclined downward is expressed as a negative (-) angle, and the direction in which the radiated electromagnetic waves are inclined upward is expressed as a positive (+) angle.

The installation angle of the sensor assembly 800 may include the first to second angles. The first angle is an angle at which the emitted electromagnetic waves do not reach the first clothes hanger 400, and the second angle is an angle at which the emitted electromagnetic waves do not reach the bottom surface of the inner case 15. In an embodiment, the first angle may be set to 0 degrees (0°), and the second angle may be set to - 40 degrees (- 40°). When the sensor assembly 80 is mounted to be tilted, many more objects can be identified. For example, as the distance from the sensor to a target object increases, the width of electromagnetic waves increases, so that there may occur misrecognition in which the clothes hanger (H) other than clothing is misrecognized as the clothing. In contrast, when the sensor assembly 800 is mounted to be tilted, the sensor assembly may emit electromagnetic waves in a manner that the emitted electromagnetic waves do not reach an object that may cause misrecognition. However, when the angle of the tilted sensor assembly 800 exceeds the second angle or more, the amount of electromagnetic waves reflected without passing through the inner case 15 may increase, resulting in occurrence of misrecognition caused by diffuse reflection.

FIG. 6A shows an example case in which the installation angle of the sensor assembly with respect to the inner case 15 is set to - 5 degrees (-5°). In a situation where no clothes are hung on the first clothes hanger 400, if the installation angle is set to - 5 degrees (5°), this means that the value measured through the sensor assembly 800 does not exceed a threshold, so that it is determined that there is no diffuse reflection caused by the inner case 15 and no clothes are caught on the first clothes hanger 400.

FIG. 6B shows an example case in which the installation angle of the sensor assembly with respect to the inner case 15 is set to - 30 degrees (- 30°). In a situation where no clothes are hung on the first clothes hanger 400, if the installation angle is set to - 30 degrees (- 30°), this means that the value measured through the sensor assembly 800 does not exceed a threshold, so that it is determined that there is no diffuse reflection caused by the inner case 15 and no clothes are caught on the first clothes hanger 400.

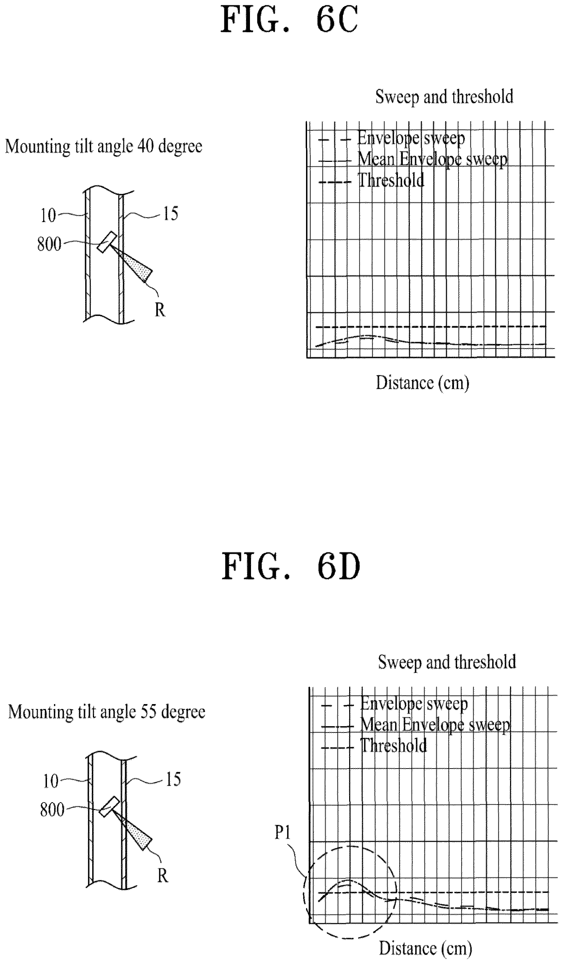

FIG. 6C shows an example case in which the installation angle of the sensor assembly with respect to the inner case 15 is set to - 40 degrees (- 40°). In a situation where no clothes are hung on the first clothes hanger 400, if the installation angle is set to - 40 degrees (- 40°), this means that the value measured through the sensor assembly 800 does not exceed a threshold, so that it is determined that there is no diffuse reflection caused by the inner case 15 and no clothes are caught on the first clothes hanger 400.

FIG. 6D shows an example case in which the installation angle of the sensor assembly with respect to the inner case 15 is set to - 45 degrees (- 45°). In a situation where no clothes are hung on the first clothes hanger 400, if the installation angle is set to - 45 degrees (- 45°), a portion (P1) exceeding a threshold among the values measured through the sensor assembly 800 may appear. This is because the electromagnetic waves emitted from the sensor assembly 800 were diffuse-reflected by the inner case 15. That is, the sensor assembly 800 must be installed at an angle greater than -45 degrees (-45°) in consideration of diffuse reflection caused by the inner case 15.

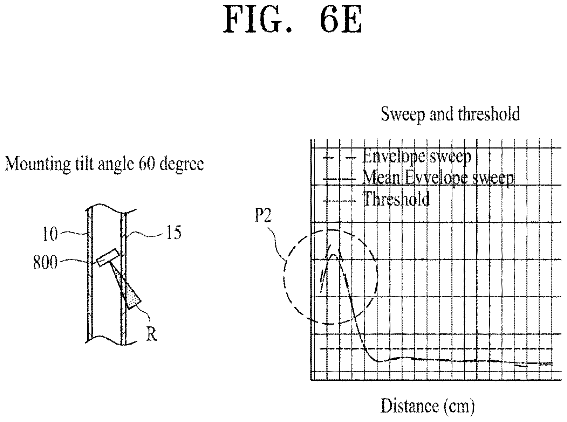

FIG. 6E shows an example case in which the installation angle of the sensor assembly with respect to the inner case 15 is set to - 60 degrees (- 60°). In a situation where no clothes are hung on the first clothes hanger 400, if the installation angle is set to - 60 degrees (- 60°), a portion (P2) exceeding a threshold among the values measured through the sensor assembly 800 may appear. A higher measurement value may be measured compared to the other case in which the installation angle is set to - 45 degrees (- 45°). This is because the electromagnetic waves emitted from the sensor assembly 800 were diffuse-reflected by the inner case 15. The greater the installation inclination angle, the higher the higher the misrecognition caused by diffuse reflection

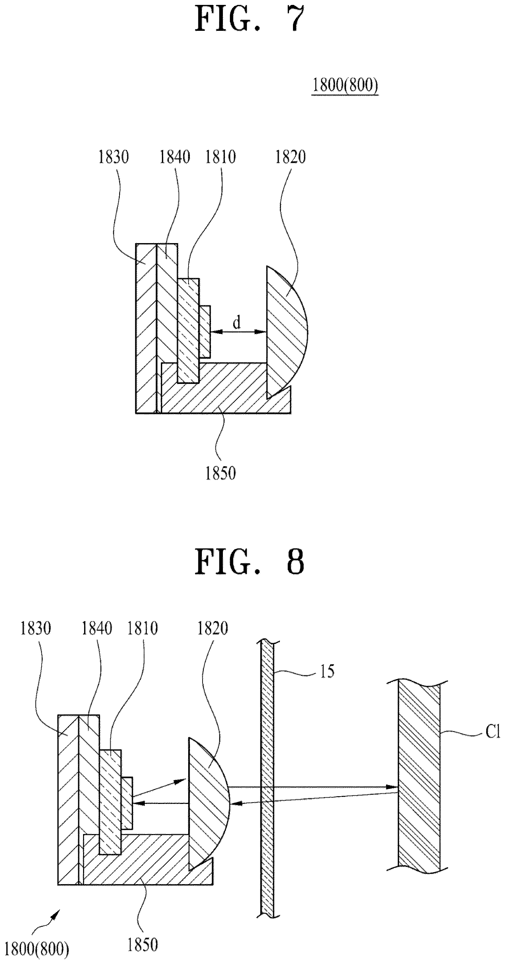

FIG. 7 is a cross-sectional view illustrating a sensor assembly 1800 according to a first embodiment of the present disclosure. The sensor assembly 1800 according to the first embodiment of the present disclosure will hereinafter be described with reference to FIG. 7.

Referring to FIG. 7, the sensor assembly 1800 may include a sensor board 1810, a lens 1820, a shielding member 1830, an insulator 1840, and a support 1850.

The sensor board 1810 may be provided as a printed circuit board (PCB). The sensor board 1810 may include a receiver and a transmitter. The sensor board 1810 may analyze the electromagnetic waves that are emitted from the transmitter to the object and reflected back from the object, and may measure the distance to the object based on the result of such analysis.

The lens 1820 may limit the radiation angle of the electromagnetic waves. The lens 1820 may prevent electromagnetic waves of the radar sensor from being emitted to the outside in a narrow space. The lens 1820 is positioned in front of the sensor board 1810 to change the propagation direction of the electromagnetic waves, but narrows the radiation angle of the electromagnetic waves transmitted from the sensor board 1810. That is, the lens 1820 serves to impart high directivity to the electromagnetic wave signals. According to the first embodiment, the lens 1820 may be implemented as a hyperbolic lens. The radiation angle of the electromagnetic waves may be different depending on the distance (d) between the lens 1820 and the sensor board 1810. Also, the radiation angle of the electromagnetic waves may be different depending on the shape of the lens 1820. The distance (d) and shape, which are factors affecting the radiation angle, can be appropriately designed according to the required radiation angle.

In an embodiment, the lens 1820 may be implemented as a plano-convex lens having a curved front surface and a flat rear surface. For example, the lens 1820 having a curved front surface and a flat rear surface may be less affected by diffuse reflection caused by the radiation of electromagnetic waves in a narrow space by narrowing the radiation angle of the electromagnetic waves traveling forward.

FIG. 8 is a diagram illustrating a state in which the propagation direction of electromagnetic waves is switched through the lens 1820. In FIG. 8, the arrows may indicate the directions of the electromagnetic waves. The electromagnetic waves emitted from the sensor board 1810 may be reflected by the clothes (CL) and may return back to the sensor board 1810 again. When the lens 1820 is applied to the electromagnetic waves, the directivity of the electromagnetic waves can increase and noise caused by diffuse reflection can be reduced.

Referring back to FIG. 7, the shielding member 1830 may be located at the rear of the sensor board 1810. The shielding member 1830 may be formed of a metal or plastic material that can block some or all of the reflected waves. For example, the metal material may be a material such as a steel plate or aluminum (Al). The shielding member 1830 may be provided in the form of a sheet, a plate, or a tape. The shielding member 1830 may reduce misrecognition caused by diffuse reflection of the sensor assembly 800 installed in a narrow space. The shielding member 1830 is configured to be in close contact with the rear end of the sensor board 1810. On the other hand, when the shielding member 1830 is implemented as a metal material, the insulator 1840 may be further provided between the shielding member 1830 and the sensor board 1810 to prevent electrical short-circuit from occurring due to metal characteristics. The insulator 1840 may be formed in a tape shape, or may be coated on a back surface of the sensor board 1810 and provided. The insulator 1840 may be formed of any material having insulation performance. If necessary, the insulator 1840 may be formed of rubber that is insulated and shielded at the same time.

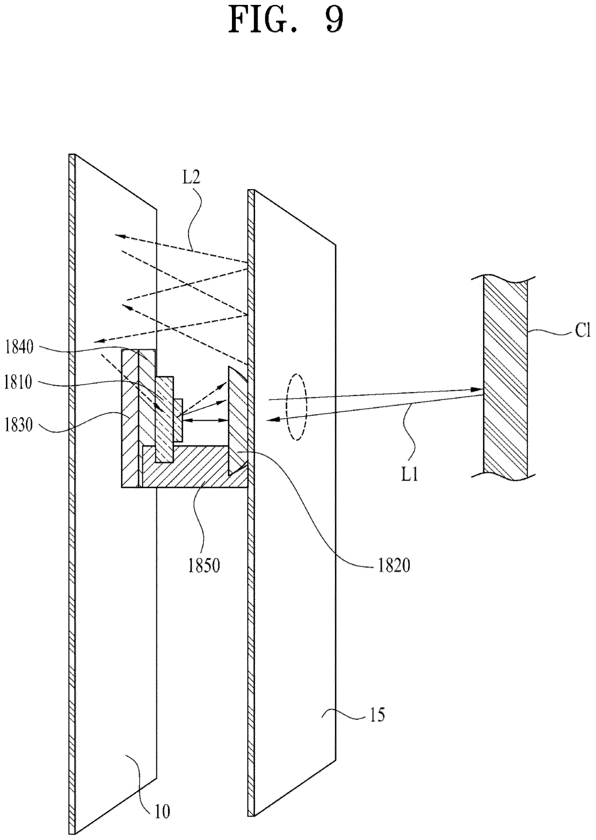

FIG. 9 is a diagram illustrating a misrecognition example in which the electromagnetic waves emitted from the sensor board 1810 are reflected from the outer wall of the inner case 15 and return to the rear side of the sensor assembly 800 to cause misrecognition of an object to be sensed. In FIG. 9, `L1' denotes the flow of signals generated when the electromagnetic wave signal normally passes through the inner case 15 and recognizes the clothes (CL) to be sensed, and `L2' denotes the flow of signals that cause misrecognition because the electromagnetic wave signal is reflected by the inner case 15 and returned after being diffusely reflected. In order to block a signal coming from the rear of the sensor board 1810, the shielding member 1830 is preferably in close contact with the rear of the sensor board 1810. The shielding member 1830 may reduce the rate of misrecognition by blocking the reflected electromagnetic waves flowing backward along a signal flow such as L2 of the sensor board 1810. According to an embodiment of the present disclosure, as the shielding member 1830 is applied to the laundry treatment apparatus, it is possible to reduce the rate of misrecognition that may occur due to diffuse reflection in a closed space through the shielding structure.

Referring back to FIG. 7, a cradle 1850 may be configured to hold the sensor board 1810 and the lens 1820. The cradle 1850 may support the sensor board 1810 and the lens 1820, and may maintain a distance between the sensor board 1810 and the lens 1820. The cradle 1850 may serve as a structure for supporting the sensor board 1810 and the lens 1820, and may include a holding groove.

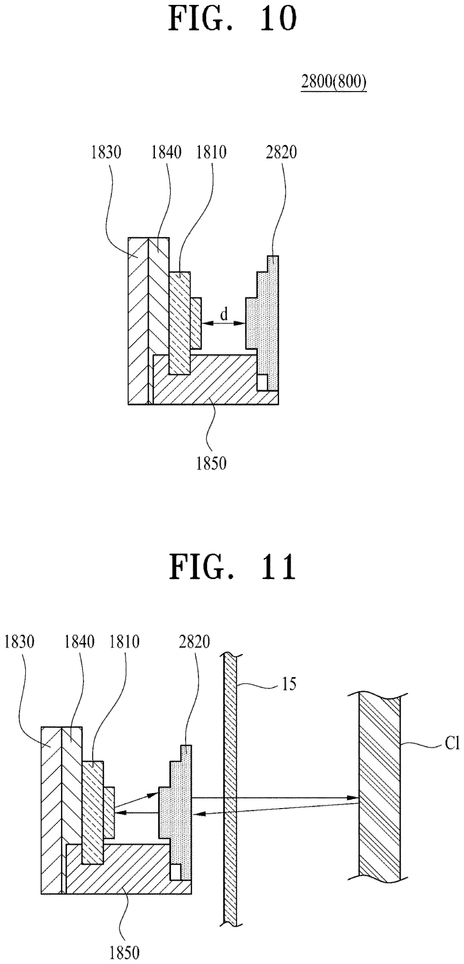

FIG. 10 is a cross-sectional view illustrating the sensor assembly 2800 according to a second embodiment of the present disclosure. The sensor assembly 2800 according to the second embodiment will be described with reference to FIG. 10. In describing the sensor assembly 2800 according to the second embodiment, the same or similar configurations to the sensor assembly 1800 according to the first embodiment use the same reference numbers as the description of the sensor assembly 1800 according to the first embodiment, and as such redundant description thereof will herein be omitted for brevity.

The lens 2820 of the sensor assembly 2800 according to the second embodiment may be implemented as a Fresnel zone plate lens. The lens 2820 is configured such that a flat side of the lens is positioned forward and a curved side of the lens is positioned backward. Since the radiation angle of the electromagnetic waves moving forward is reduced through the lens 2820, the sensor assembly can be less affected by diffuse reflection generated when the electromagnetic waves are radiated in a narrow space. FIG. 11 is a diagram illustrating a state in which the propagation direction of electromagnetic waves is switched through the lens 2820. Even when the lens 2820 is implemented as the Fresnel zone plate lens, the lens 2820 may serve to prevent electromagnetic waves of the radar sensor from being emitted to the outside in a narrow space. In addition to the lens described above, various types of lenses can also be applied to the present disclosure without departing from the scope or spirit of the present disclosure.

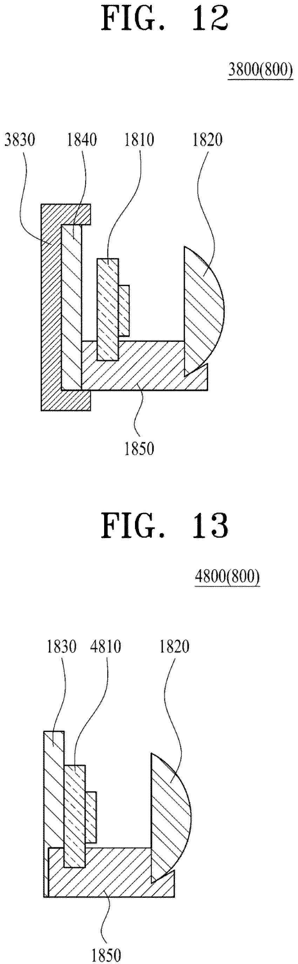

FIG. 12 is a cross-sectional view illustrating a sensor assembly 3800 according to a third embodiment of the present disclosure. The sensor assembly 3800 is one example of the sensor assembly 800. The sensor assembly 3800 according to the third embodiment will be described with reference to FIG. 12. In describing the sensor assembly 3800 according to the third embodiment, the same or similar configurations to the sensor assembly 1800 according to the first embodiment use the same reference numbers as the description of the sensor assembly 1800 according to the first embodiment, and as such redundant description thereof will herein be omitted for brevity. The shielding member 3830 may be provided in a structure surrounding the rear and side surfaces of the insulator 1840. Since the rear and side surfaces of the insulator 1840 are wrapped by the shielding member 3830, the shielding member 3830 can prevent the electromagnetic waves from penetrating through a separation space between the shielding member 3830 and the sensor board 1810 and can reduce the misrecognition rate of objects to be sensed. Here, the separation space may be generated differently according to the thickness of the insulator 1840.

FIG. 13 is a cross-sectional view illustrating a sensor assembly 4800 according to a fourth embodiment of the present disclosure. The sensor assembly 4800 is one example of the sensor assembly 800. The sensor assembly 4800 according to the fourth embodiment will be described with reference to FIG. 13. In describing the sensor assembly 4800 according to the fourth embodiment, the same or similar configurations to the sensor assembly 1800 according to the first embodiment use the same reference numbers as the description of the sensor assembly 1800 according to the first embodiment, and as such redundant description thereof will herein be omitted for brevity. The sensor board 4810 may include all the constituent configurations of the sensor board 1810 described above. In addition, the rear surface of the sensor board 4810 may be coated with an insulator. By coating the insulator on the rear surface of the sensor board 4810, the process of providing a separate insulator and assembling this insulator need not be used.

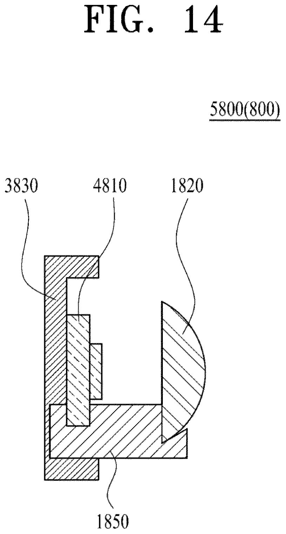

FIG. 14 is a cross-sectional view illustrating a sensor assembly 5800 according to a fifth embodiment of the present disclosure. The sensor assembly 5800 is one example of the above-described sensor assembly 800. The sensor assembly 5800 is one example of the sensor assembly 5800. The sensor assembly 5800 according to the fifth embodiment will be described with reference to FIG. 14. In describing the sensor assembly 5800 according to the fifth embodiment, the same or similar configurations to the sensor assembly 1800 according to the first embodiment use the same reference numbers as the description of the sensor assembly 1800 according to the first embodiment, and as such redundant description thereof will herein be omitted for brevity. The sensor board 4810 may include all the constituent configurations of the sensor board 1810 described above. In addition, the rear surface of the sensor board 4810 may be coated with an insulator. By coating the insulator on the rear surface of the sensor board 4810, the process of providing a separate insulator and assembling this insulator need not be used. The shielding member 3830 may be provided in a structure surrounding the rear and side surfaces of the sensor board 4810.

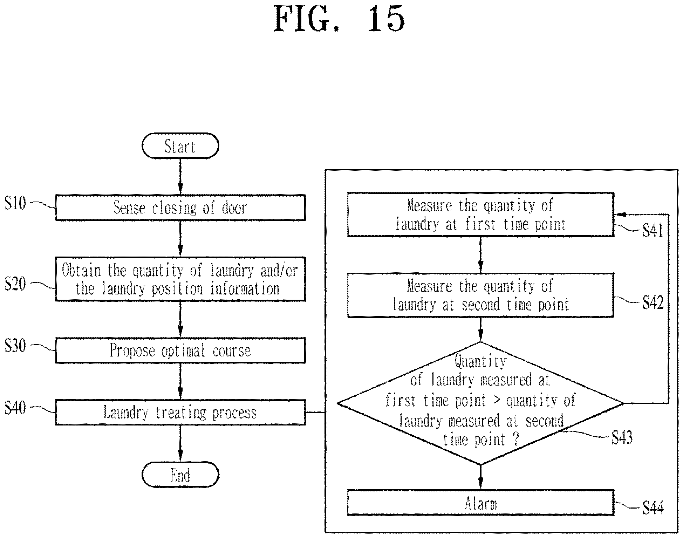

FIG. 15 is a flowchart illustrating a method for controlling the laundry treatment apparatus 1 according to an embodiment of the present disclosure. A method for controlling the laundry treatment apparatus 1 according to the present disclosure will hereinafter be described with reference to FIG. 15 and FIG. 1.

The sensor assembly 800 senses the number (amount) of clothes. The sensor assembly 800 may further sense a position where the clothes are hung (or caught). When the number (amount) of the clothes disposed in the laundry treatment apparatus 1 is recognized, the laundry treatment apparatus 1 can propose an optimal course in which the clothes can be less damaged. Furthermore, When the location of clothes is recognized, the laundry treatment apparatus 1 can propose a course more optimal. For example, the optimal course may be any one of a standard course, a rapid course (i.e., a course with a shorter processing time than the standard course), an intense course (i.e., a course with a higher processing effect than the standard course), and an energy saving course (i.e., a course with less energy consumption than the standard course). Since the laundry treatment apparatus 1 proposes the optimal course as described above, the laundry treatment apparatus 1 can reduce the electricity bill to be charged to the user and can prevent damage to fabrics of clothes to be treated. Whereas the weight sensor disclosed in the Korean Patent Publication No. KR10-2019132B1 is designed only to sense the weight of clothes, the laundry treatment apparatus 1 provided with the sensor assembly 800 according to the embodiments of the present disclosure can further sense the number (amount) of clothes and thus propose a more appropriate course based on the sensed result.

In an embodiment, the laundry treatment apparatus 1 may further include a door sensor 50 for detecting a closed state of the door 300. The door sensor 50 may be provided in the door 300 or the cabinet 10 corresponding to the door 300. For example, the laundry treatment apparatus 1 may be controlled to perform laundry treatment when the closed state of the door is sensed by the door sensor 50. When the door sensor 50 senses the closed state of the door 300 (S10), the sensor assembly 800 may be configured to recognize the number (amount) of clothes disposed therein and the position of clothes (S20).

A controller (not shown) of the laundry treatment apparatus 1 may suggest an optimal course to the user based on the obtained information (S30). In the description of the present disclosure, the term 'course' has the same or similar meaning to the term 'mode'. According to the embodiments of the present disclosure, the controller (not shown) may propose an optimal course that is set based on the acquired amount (number) of clothes to the user, or may automatically execute the proposed optimal course. In one embodiment, when the number (or amount) of clothes is sensed to be less than or equal to a reference quantity, the controller (not shown) may execute an optimal course appropriate for the reference quantity or less. In this case, the reference quantity may be determined to be an absolute quantity. For example, the reference quantity may be determined to be an absolute quantity such as 3 or 4 articles of clothing, etc. Alternatively, the reference quantity may be determined according to a ratio of a maximum number of articles of clothing (capable of being hung on the first clothes hanger 400) to the number of articles of clothing accommodated in the laundry treatment apparatus. For example, the reference quantity may be set to 70% or less. In a situation where the maximum number of articles of clothing that can be hung on the first clothes hanger 400 is 3, if 1 or 2 articles of clothing are caught on the first clothes hanger 400, this means that the quantity of 1 or 2 articles of clothing (1/3=33%, 2/3=66%) is less than the reference quantity. In a situation where the maximum number of articles of clothing that can be hung on the first clothes hanger 400 is 4, if 1 or 2 articles of clothing are hung on the first clothes hanger 400, this means that the quantity of 1 or 2 articles of clothing (1/4=25%, 2/4=50%) is less than the reference quantity. In a situation where the maximum number of articles of clothing that can be hung on the first clothes hanger 400 is 5, if 1, 2 or 3 articles of clothing are hung on the first clothes hanger 400, this means that the quantity of 1, 2 or 3 articles of clothing (1/5=20%, 2/5=40%, 3/5=60%) is less than the reference quantity. For example, the optimal course according to the reference quantity of clothes may be any one of a standard course, a rapid course (i.e., a course with a shorter processing time than the standard course), and an energy saving course (i.e., a course with less energy consumption than the standard course).

A laundry treating cycle according to a course that is automatically selected by the user or through a proposed optimal course may be performed (S40). The sensor assembly 800 may sense the quantity of clothes in real time during the treating cycle of the laundry treatment apparatus 1, and may sense falling of the clothes. More specifically, when the quantity of clothes sensed by the sensor assembly 800 changes during the treating cycle of the laundry treatment apparatus 1, the laundry treatment apparatus 1 may determine that the clothes have fallen. In an embodiment, the quantity of clothes may be measured at a first time point (S41). The controller of the laundry treatment apparatus 1 may measure the quantity of clothes at a second time point later than the first time point (S42). The controller may compare the quantity measured at the first time point with the quantity measured at the second time point (S43). When the quantity sensed at the second time point is less than the quantity sensed at the first time point preceding the second time point, the controller (not shown) may determine that the clothes have fallen. If fallen clothes are sensed, the controller may provide an inform(for example, an alarm) to the user (S44).

In association with technology of sensing the fall of clothes, whereas the weight sensor disclosed in Korean Patent Publication No. KR10-2019132B1 has difficulty in sensing the fall of lightweight clothes, the light treatment apparatus including the sensor assembly 800 according to the embodiments of the present disclosure can sense the number of articles of clothing, and can thus more accurately sense the fall of clothes.

In the above, it is described that the sensor assembly 800 is applied to the exemplary laundry treatment apparatus 1. a skilled person in the art would recognize that the sensor assembly 800 can be applied to detect an object accommodated in a limited space, and will be able to apply the disclosed sensor assembly 800 to various home appliances.

It will be apparent to those skilled in the art that various modifications and variations can be made in the present disclosure without departing from the spirit or scope of the inventions. Thus, it is intended that the present disclosure covers the modifications and variations of this invention provided they come within the scope of the appended claims and their equivalents.

## Claims

1. A laundry treatment apparatus comprising:
a cabinet;
an inner case disposed in the cabinet and provided with walls defining an accommodation space in which clothes are accommodated;
a supply unit configured to supply at least one of air or moisture to the accommodation space;
a clothes hanger disposed in the accommodation space so as to support the accommodated clothes; and
a sensor assembly installed between the cabinet and the inner case, and configured to sense at least one of a quantity of clothes accommodated in the accommodation space or a position of the accommodated clothes by emitting electromagnetic waves as a signal and receiving a reflected signal.

2. The laundry treatment apparatus according to claim 1, wherein:
the clothes hanger is provided to allow a plurality of clothes to be hung in a first direction; and
the sensor assembly is installed in a direction in which the plurality of clothes appears to overlap each other.

3. The laundry treatment apparatus according to claim 1, wherein:
the clothes hanger is provided to allow a plurality of clothes to be hung in a first direction; and
the sensor assembly is installed in a direction in which the first direction extends.

4. The laundry treatment apparatus according to claim 1, wherein:
the sensor assembly is installed at a position lower than a height of the lowermost end of the clothes hanger.

5. The laundry treatment apparatus according to claim 1, wherein:
the sensor assembly is installed at a position lower than an average height of lower ends of hangers supported by the clothes hanger.

6. The laundry treatment apparatus according to claim 1, wherein:
the sensor assembly is installed at a position lower than an average height of lower ends of hangers supported by the clothes hanger by a first height or more,
the first height is defined differently according to an electromagnetic-wave radiation angle of the sensor assembly.

7. The laundry treatment apparatus according to claim 6, wherein:
the electromagnetic-wave radiation angle is set in a manner that all of tops and bottoms caught on the clothes hanger are included in a range of the radiated electromagnetic waves,
wherein
the radiation angle is set to a range in which several hangers supported by the clothes hanger are excluded in the range of the radiated electromagnetic waves.

8. The laundry treatment apparatus according to claim 6, wherein:
the electromagnetic-wave radiation angle is set in a manner that all of top garments and bottom garments supported by the clothes hanger are within a range of the radiated electromagnetic waves,
wherein
the radiation angle is set to a range in which the radiated electromagnetic waves do not reach the walls defining the accommodation space.

9. The laundry treatment apparatus according to claim 1, wherein:
the sensor assembly is mounted at an installation angle between a first angle and a second angle,
wherein
the first angle is an angle at which the radiated electromagnetic waves do not reach the clothes hanger; and
the second angle is an angle at which the radiated electromagnetic waves do not reach a bottom surface of the inner case.

10. The laundry treatment apparatus according to claim 1, wherein the sensor assembly includes:
a sensor board configured to transmit the electromagnetic waves and receive reflected electromagnetic waves; and
a lens located at a front side of the sensor board to switch a propagation direction of the electromagnetic waves in a manner that a radiation angle of the electromagnetic waves transmitted from the sensor board is narrowed.

11. The laundry treatment apparatus according to claim 1, wherein the sensor assembly includes:
a sensor board configured to transmit and receive an electromagnetic wave signal; and
a shielding member located at a rear side of the sensor board, and configured to shield transmission of electromagnetic waves.

12. The laundry treatment apparatus according to claim 11, wherein:
the shielding member is configured to have a larger area than the sensor board in a manner that the entire area of the sensor board overlaps the shielding member.

13. The laundry treatment apparatus according to claim 11, wherein:
the shielding member is configured to have a ` [ '-shaped cross-section formed to surround a side surface of the sensor board.

14. The laundry treatment apparatus according to claim 11, wherein the sensor assembly further includes:
an insulating member disposed between the sensor board and the shielding member.

15. The laundry treatment apparatus according to claim 1, further comprising:
a controller,
wherein, if the quantity of clothes sensed by the sensor assembly is changed in a treating cycle of the laundry treatment apparatus, the controller determines occurrence of fallen clothes.

16. The laundry treatment apparatus according to claim 15, wherein:
when occurrence of the fallen clothes is determined, the laundry treatment apparatus provides an inform to a user.

17. A laundry treatment apparatus comprising:
a cabinet configured to include walls defining an accommodation space in which clothes are accommodated; and
a sensor installed in a space separated from the accommodation space by the walls, and configured to sense at least one of a quantity of clothes accommodated in the accommodation space or a position of the accommodated clothes by emitting electromagnetic waves as a signal and receiving a reflected signal.

18. A home appliance defining a limited space therein comprising:
a sensor assembly senses an object accommodated in the limited space,
wherein the sensor assembly comprises:
a sensor board configured to transmit electromagnetic waves and receive reflected electromagnetic waves; and
a lens located at a front side of the sensor board to switch a propagation direction of the electromagnetic waves in a manner that a radiation angle of the electromagnetic waves transmitted from the sensor board is narrowed; and
a shielding member located at a rear side of the sensor board and configured to shield transmission of electromagnetic waves.

19. The sensor assembly according to claim 18, wherein:
the shielding member is configured to have a larger area than the sensor board in a manner that the entire area of the sensor board overlaps the shielding member.

20. The sensor assembly according to claim 18, further comprising:
an insulating member disposed between the sensor board and the shielding member.
